# FASCICULE DE BREVET EUROPEEN

(11) **EP 3 781 537 B1**
(45) Date de publication et mention de la délivrance du brevet: **29.05.2024**
(21) Numéro de dépôt: 19722169.0
(22) Date de dépôt: 04.04.2019
(51) Int. Cl.: C04B 35/565, C04B 35/573, C04B 35/584, C04B 35/628, C04B 35/80

(54) **PROCÉDÉ DE FABRICATION D'UNE PIÈCE EN MATÉRIAU COMPOSITE**
VERFAHREN ZUR HERSTELLUNG EINES AUS EINEM VERBUNDWERKSTOFF GEFERTIGTEN TEILS
METHOD FOR MANUFACTURING A PART MADE OF A COMPOSITE MATERIAL

(30) Priorité: 19.04.2018 FR 1853435
(43) Date de publication de la demande: 24.02.2021
(73) Titulaire: Safran Ceramics, 33185 Le Haillan (FR)
(72) Inventeur: CLERAMBOURG, Aurélia, 77550 Moissy-Cramayel (FR); MENDEZ, Emilie, 77550 Moissy-Cramayel (FR); PHILIPPE, Eric, 77550 Moisy-Cramayel (FR); VICIEN, Denis, 77550 Moissy-Cramayel (FR)
(74) Mandataire: Cabinet Beau de Loménie
(86) Numéro de dépôt international: PCT/FR2019/050800
(87) Numéro de publication internationale: WO 2019/202235

(56) Documents cités:
- US-A- 5 840 221
- US-A1- 2004 192 534
- US-A1- 2017 313 627

## Description

La présente invention concerne la fabrication de pièces en matériau composite à matrice céramique (matériau CMC) par technique d'infiltration à l'état fondu (« Melt-Infiltration »).

### Arrière-plan de l'invention

Des pièces en matériau CMC peuvent être formées par la technique d'infiltration à l'état fondu. Selon cette technique, on peut introduire du silicium fondu dans la porosité d'une structure fibreuse comprenant des particules de carbure de silicium afin de former une matrice céramique densifiant la structure fibreuse.

Il est souhaitable dans cette technique que le silicium fondu pénètre de manière homogène et complète au sein de la porosité de la structure fibreuse, afin que la pièce obtenue présente une porosité résiduelle minimale et donc des propriétés mécaniques optimisées.

Toutefois, certaines des techniques d'infiltration à l'état fondu connues ne donnent pas des résultats entièrement satisfaisants dans la mesure où le degré d'avancée du silicium fondu dans la porosité peut être limité, conduisant à une pénétration inhomogène du silicium fondu dans la structure fibreuse.

Ce caractère inhomogène peut être d'autant plus prononcé dans le cadre des techniques d'infiltration à l'état fondu réactive (« Reactive Melt Infiltration ») où des particules de carbone sont présentes dans la structure fibreuse. Dans ce dernier cas, le produit de réaction entre le silicium fondu et les particules de carbone peut en effet conduire à un bouchage local de la porosité de la préforme, rendant plus difficile l'avancée du silicium fondu.

US5840221 montre un procédé de fabrication d'une pièce en matériau composite à matrice céramique, comprenant les étapes suivantes : infiltration d'une structure fibreuse avec particules de carbure de silicium présentent une distribution de taille bimodale, les particules fines ont une taille de 0,1 à 0,8 micron et sont présentes dans une quantité de 25 à 55 % en poids dans la barbotine, les grosses particules ont une taille de 1 à 15 microns et sont présentes dans une quantité de 1 à 30 % en poids dans la barbotine ; infiltration avec du silicium à l'état fondu pour préparer un CMC.

### Objet et résumé de l'invention

L'invention vise, selon un premier aspect, un procédé de fabrication d'une pièce en matériau composite à matrice céramique, comprenant au moins :
- l'infiltration d'une structure fibreuse comprenant une composition pulvérulente par une composition d'infiltration à l'état fondu comprenant au moins du silicium afin de former une matrice céramique dans la porosité de la structure fibreuse, la composition pulvérulente comprenant au moins des particules de carbure de silicium,
dans lequel les particules de carbure de silicium présentent une distribution de taille bimodale avec un premier ensemble de particules de carbure de silicium présentant une première taille moyenne et un deuxième ensemble de particules de carbure de silicium présentant une deuxième taille moyenne inférieure à la première taille moyenne, le nombre de particules du premier ensemble étant supérieur au nombre de particules du deuxième ensemble.

Par « taille moyenne », on désigne la dimension donnée par la distribution granulométrique statistique à la moitié de la population, dite D50.

La mise en oeuvre d'une distribution bimodale telle que définie plus haut pour les particules de carbure de silicium présentes dans la porosité de la structure fibreuse permet d'obtenir un réseau de porosité facilitant l'avancée de la composition d'infiltration au sein de la structure fibreuse. On obtient ainsi une densification homogène de la structure fibreuse et donc une pièce en matériau CMC ayant des propriétés mécaniques améliorées.

Dans un exemple de réalisation, les particules du premier ensemble représentent au moins 60 % en nombre du total des particules de carbure de silicium dans la composition pulvérulente.

La première taille moyenne est comprise entre 1 µm et 5 µm.

Dans un exemple de réalisation, les particules du deuxième ensemble représentent au plus 40 % en nombre du total des particules de carbure de silicium dans la composition pulvérulente.

La deuxième taille moyenne est comprise entre 0,1 µm et 1 µm.

Dans un exemple de réalisation, les particules du premier ensemble représentent entre 60 % et 90 % en nombre du total des particules de carbure de silicium dans la composition pulvérulente, et les particules du deuxième ensemble représentent entre 10 % et 40 % en nombre du total des particules de carbure de silicium dans la composition pulvérulente.

Dans un exemple de réalisation, la composition pulvérulente comprend en outre des particules de carbone.

L'invention est particulièrement avantageuse dans le cas où du carbone est présent dans la composition pulvérulente car en facilitant l'avancée du silicium fondu, elle permet de réduire le risque de bouchage local rencontré dans les techniques connues.

En variante, la composition pulvérulente peut être dépourvue de particules de carbone.

Dans un exemple de réalisation, la teneur volumique en particules de carbone dans la composition pulvérulente est supérieure ou égale à 5%, par exemple à 20%.

Dans un exemple de réalisation, la structure fibreuse peut comprendre des fils de carbure de silicium présentant une teneur en oxygène inférieure ou égale à 1% en pourcentage atomique.

Dans un exemple de réalisation, la structure fibreuse est formée par tissage tridimensionnel ou à partir d'une pluralité de strates fibreuses bidimensionnelles.

Dans un exemple de réalisation, la structure fibreuse est partiellement densifiée par une première phase de matrice céramique, avant l'infiltration.

Dans un exemple de réalisation, la pièce fabriquée est une pièce de turbomachine. La pièce peut être une pièce de partie chaude d'une turbine à gaz d'un moteur aéronautique ou d'une turbine industrielle. En particulier, la pièce peut constituer une partie au moins d'un distributeur, une paroi d'une chambre de combustion, un secteur d'anneau de turbine ou une aube de turbomachine.

### Brève description des dessins

D'autres caractéristiques et avantages de l'invention ressortiront de la description suivante, donnée à titre non limitatif, en référence aux dessins annexés fournis à titre non limitatif, dans lesquels :
- la figure 1 est un ordinogramme illustrant une succession d'étapes d'un exemple de procédé selon l'invention,
- la figure 2 est un exemple de distribution de taille bimodale de particules de carbure de silicium utilisables dans le cadre de l'invention,
- les figures 3A et 3B sont des photographies illustrant la montée capillaire obtenue lorsque des particules de carbure de silicium ayant une distribution monomodale sont utilisées,
- les figures 4A et 4B sont des photographies illustrant la montée capillaire obtenue lorsque l'on utilise des particules de carbure de silicium ayant la distribution de taille bimodale de la figure 2, et
- la figure 5 est une photographie illustrant la montée capillaire obtenue dans le cadre d'un exemple de procédé selon l'invention.

### Description détaillée de modes de réalisation

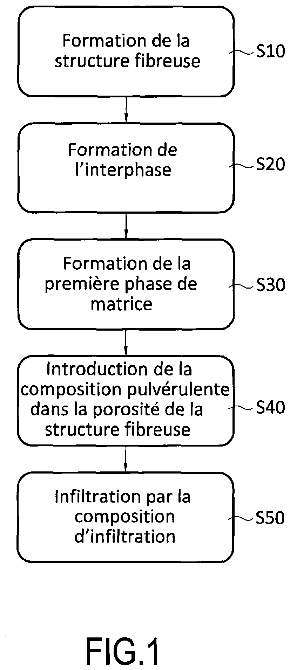

Un exemple de procédé de fabrication d'une pièce en matériau CMC selon l'invention va maintenant être décrit en lien avec l'ordinogramme de la figure 1.

Une première étape S10 du procédé peut consister à former la structure fibreuse par exemple par tissage tridimensionnel. La structure fibreuse peut être formée de fils céramiques, par exemple de fils en carbure de silicium. La structure fibreuse peut constituer le renfort fibreux de la pièce en matériau composite à obtenir. La structure fibreuse obtenue lors de l'étape S10 peut constituer une préforme fibreuse de la pièce à obtenir.

Des exemples de fils en carbure de silicium utilisables peuvent être des fils « Nicalon », « Hi-Nicalon » ou « Hi-Nicalon-S » commercialisés par la société japonaise NGS. Les fils céramiques de la structure fibreuse peuvent présenter une teneur en oxygène inférieure ou égale à 1% en pourcentage atomique. Les fils « Hi-Nicalon-S », par exemple, présentent une telle caractéristique.

Par « tissage tridimensionnel » ou « tissage 3D », il faut comprendre un mode de tissage par lequel certains au moins des fils de chaîne lient des fils de trame sur plusieurs couches de trame. Une inversion des rôles entre chaîne et trame est possible dans le présent texte et doit être considérée comme couverte aussi par les revendications. La structure fibreuse peut par exemple présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure.

Il est aussi possible de partir de textures fibreuses telles que des tissus bidimensionnels ou des nappes unidirectionnelles, et d'obtenir la structure fibreuse par drapage de telles textures fibreuses sur une forme. Ces textures peuvent éventuellement être liées entre elles par exemple par couture ou implantation de fils pour former la structure fibreuse.

Dans une étape S20, on peut former une interphase de défragilisation par infiltration chimique en phase vapeur (« Chemical Vapor Infiltration ») sur les fils de la structure fibreuse.

L'épaisseur de l'interphase peut par exemple être comprise entre 10 nm et 1000 nm, et par exemple entre 10 nm et 100 nm. Après formation de l'interphase, la structure fibreuse reste poreuse, la porosité accessible initiale n'étant comblée que pour une partie minoritaire par l'interphase.

L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone).

L'interphase a ici une fonction de défragilisation du matériau composite qui favorise la déviation de fissures éventuelles parvenant à l'interphase après s'être propagées dans la matrice, empêchant ou retardant la rupture de fibres par de telles fissures. En variante, on notera qu'il est possible de former l'interphase sur les fils avant la formation de la structure fibreuse, c'est-à-dire avant mise en oeuvre de l'étape S10.

Il est ensuite réalisé une étape S30 de formation d'une première phase de matrice céramique dans la porosité de la structure fibreuse, sur l'interphase qui peut avoir été formée au préalable sur les fils. Cette première phase de matrice peut être formée par infiltration chimique en phase vapeur. La première phase de matrice céramique peut par exemple comprendre du SiC et/ou du Si₃N₄.

Le taux de porosité résiduelle de la structure fibreuse suite à cette étape S30 et avant introduction de la composition pulvérulente peut être supérieur ou égal à 25%, par exemple compris entre 30% et 35%. De manière générale, le taux de porosité résiduelle de la structure fibreuse après mise en oeuvre de l'étape S30 est suffisant pour permettre l'introduction de la composition pulvérulente dans la porosité de la structure fibreuse et la formation d'une deuxième phase de matrice par introduction de la composition d'infiltration.

La composition pulvérulente peut être introduite dans la structure fibreuse par voie barbotine (« slurry-cast ») (étape S40). Une telle technique d'introduction est connue en soi.

La composition pulvérulente comprend au moins deux ensembles de particules de carbure de silicium ayant chacun une taille moyenne (taille D50) différente.

Les particules de carbure de silicium de l'ensemble ayant la taille moyenne la plus élevée sont plus nombreuses que celles de l'ensemble ayant la taille moyenne la plus basse.

Dans un exemple de réalisation, les particules du premier ensemble représentent entre 60 % et 90 % en nombre du total des particules de carbure de silicium dans la composition pulvérulente, et les particules du deuxième ensemble représentent entre 10 % et 40 % en nombre du total des particules de carbure de silicium dans la composition pulvérulente.

La première taille moyenne est comprise entre 1 µm et 5 µm, et la deuxième taille moyenne est comprise entre 0,1 µm et 1 µm.

La distribution de taille des particules de carbure de silicium peut être déterminée par technique de diffraction laser, de manière connue en soi.

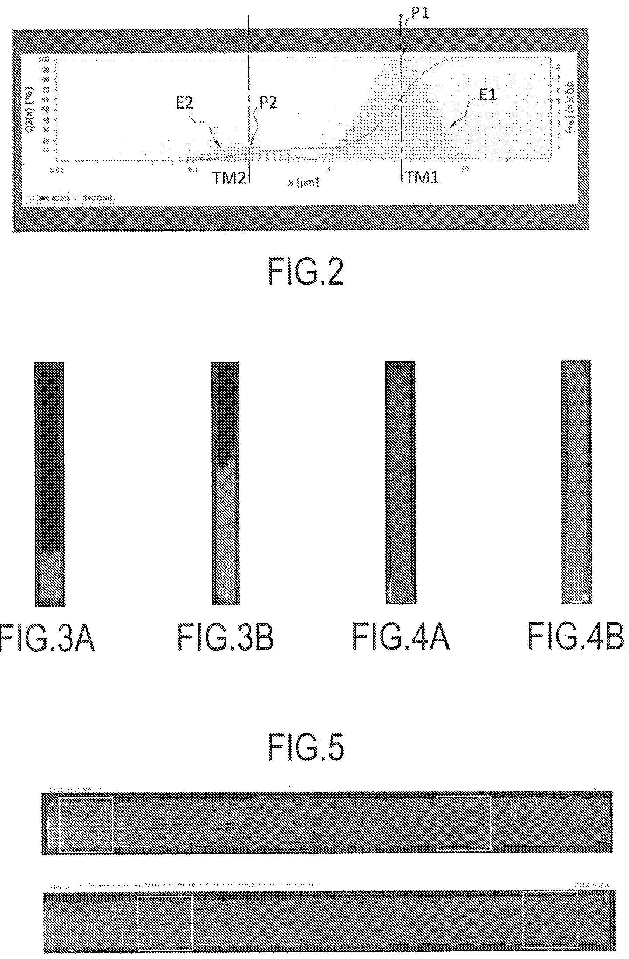

Les particules de carbure de silicium présentent une distribution de taille bimodale dans la composition pulvérulente. On a représenté sur la figure 2 un exemple d'une telle distribution bimodale utilisable dans le cadre de l'invention. Sur cette figure, pour une taille x donnée de particules, l'ordonnée indique la fraction des particules ayant cette taille x. La distribution de taille peut être une distribution en nombre.

Les particules de silicium définissent un premier ensemble E1 de particules de carbure de silicium et un deuxième ensemble E2 de particules de carbure de silicium.

La distribution bimodale est asymétrique. La distribution bimodale présente deux pics (maxima) distincts P1 et P2. La hauteur du pic P1 de la distribution du premier ensemble E1 peut être différente, par exemple supérieure, à la hauteur du pic P2 de la distribution du deuxième ensemble E2. En particulier, la hauteur du pic P1 peut être supérieure au double, voire au triple, de la hauteur du pic P2.

La distribution de chacun des premier et deuxième ensemble E1 et E2 peut correspondre à une distribution normale. Les particules du premier ensemble E1 présentent une première taille moyenne TM1 et les particules du deuxième ensemble E2 présentent une deuxième taille moyenne TM2. La première taille moyenne TM1 est supérieure à la deuxième taille moyenne TM2. La deuxième taille moyenne TM2 peut être espacée de la première taille moyenne TM1 par au moins deux, voire au moins trois, écarts-types de la distribution du premier ensemble E1. La différence entre la première taille moyenne et la deuxième taille moyenne (quantité TM1 - TM2) peut par exemple être supérieure ou égale à 1 µm, par exemple à 2,5 µm.

A titre d'exemple de particules de carbure de silicium ayant une distribution de taille bimodale utilisables dans le cadre de l'invention, on peut citer la poudre de carbure de silicium commercialisée sous la référence « B-hp » par la société H.C.Starck.

Une fois la composition pulvérulente introduite dans la structure fibreuse, par exemple par injection d'une barbotine, la structure fibreuse peut être séchée. On obtient alors une structure fibreuse chargée par la composition pulvérulente. La composition pulvérulente est présente dans la porosité de la structure fibreuse.

Comme indiqué précédemment, la composition pulvérulente peut en outre comprendre des particules de carbone, par exemple en une teneur volumique comprise entre 5% et 30%. A titre d'exemple de particules de carbone utilisables, on peut citer les particules commercialisées sous la référence « LUVOMAXX^{®} MT N-991 » par la société Lehmann & Voss & Co. En variante, la composition pulvérulente peut être dépourvue de particules de carbone.

Une fois la composition pulvérulente introduite, on réalise l'étape S50 durant laquelle on infiltre la porosité de la structure fibreuse avec une composition d'infiltration à l'état fondu comprenant au moins du silicium de manière à former une matrice céramique dans la porosité de la structure fibreuse. La formation de cette matrice céramique peut permettre de finaliser la densification de la pièce.

Cette étape d'infiltration correspond à une étape d'infiltration à l'état fondu. La composition d'infiltration peut être constituée de silicium pur fondu ou en variante être sous la forme d'un alliage fondu de silicium et d'un ou plusieurs autres constituants. La composition d'infiltration peut comprendre majoritairement en masse du silicium, c'est-à-dire présenter une teneur massique en silicium supérieure ou égale à 50%. La composition d'infiltration peut par exemple présenter une teneur massique en silicium supérieure ou égale à 75%. Le(s) constituant(s) présent(s) au sein de l'alliage de silicium peuvent être choisi(s) parmi B, Al, Mo, Ti, et leurs mélanges. Lorsque la composition pulvérulente comprend des particules de carbone, une réaction chimique peut se produire entre la composition d'infiltration et ces particules de carbone lors de l'infiltration aboutissant à la formation de carbure de silicium.

Après l'étape S50, on obtient une pièce en matériau CMC. Une telle pièce en matériau CMC peut être une pièce statique ou rotative de turbomachine. Des exemples de pièces de turbomachine ont été mentionnés plus haut. Une telle pièce peut en outre être revêtue d'un revêtement de barrière environnementale ou thermique avant son utilisation.

On a décrit à la figure 1 un exemple dans lequel la structure fibreuse est pré-densifiée durant l'étape S30 avant réalisation de l'infiltration à l'état fondu, mais bien entendu on ne sort pas du cadre de l'invention lorsque ce n'est pas le cas. L'intégralité de la matrice peut être formée lors de l'étape d'infiltration par du silicium fondu.

On a représenté aux figures 3A, 3B, 4A et 4B le résultat obtenu après infiltration d'un corps cru formé d'un mélange de poudres de carbure de silicium et de carbone par du silicium fondu.

Les figures 3A et 3B montrent les résultats obtenus lors de l'utilisation d'une poudre de carbure de silicium ayant une distribution de taille monomodale. Des particules de carbure de silicium ayant une telle distribution de taille ne sont pas utilisables dans le cadre de l'invention.

Les figures 4A et 4B montrent les résultats obtenus lors de l'utilisation d'une poudre de carbure de silicium ayant la distribution bimodale de la figure 2. Ces particules de carbure de silicium sont utilisables dans le cadre de l'invention. Aux figures 3A et 4A, il y a dans le corps cru 70% en volume de particules de carbure de silicium et 30% en volume de particules de carbone. Aux figures 3B et 4B, il y a dans le corps cru 80% en volume de particules de carbure de silicium et 20% en volume de particules de carbone.

Les inventeurs ont constaté que la montée capillaire du silicium fondu était incomplète lors de la mise en oeuvre de particules de carbure de silicium ayant une distribution de taille monomodale (figures 3A et 3B). En revanche, la montée capillaire du silicium fondu était complète lors de la mise en oeuvre de particules de carbure de silicium ayant une distribution de taille bimodale telle que décrite plus haut (figures 4A et 4B).

La photographie de la figure 5 montre le résultat obtenu après infiltration par du silicium fondu d'une structure fibreuse remplie au préalable d'une composition pulvérulente comprenant 80% en volume de particules de carbure de silicium ayant la distribution de taille bimodale de la figure 2, et 20% en volume de particules de carbone. On constate que le silicium fondu a pu imprégner la structure fibreuse sur toute sa longueur et l'obtention d'une densification homogène.

Sur la figure 5, la première moitié de la longueur de la structure fibreuse densifiée est en haut, et la deuxième moitié de la longueur de la structure fibreuse densifiée est en bas. Le phénomène d'obstruction lors de l'infiltration n'est pas mis en évidence et une densification homogène est obtenue.

L'expression « compris(e) entre ... et ... » doit se comprendre comme incluant les bornes.

## Revendications

1. Procédé de fabrication d'une pièce en matériau composite à matrice céramique, comprenant au moins :
- l'infiltration d'une structure fibreuse comprenant une composition pulvérulente par une composition d'infiltration à l'état fondu comprenant au moins du silicium afin de former une matrice céramique dans la porosité de la structure fibreuse, la composition pulvérulente comprenant au moins des particules de carbure de silicium,
dans lequel les particules de carbure de silicium présentent une distribution de taille bimodale avec un premier ensemble (E1) de particules de carbure de silicium présentant une première taille moyenne (TM1) et un deuxième ensemble (E2) de particules de carbure de silicium présentant une deuxième taille moyenne (TM2) inférieure à la première taille moyenne, le nombre de particules du premier ensemble étant supérieur au nombre de particules du deuxième ensemble,
dans lequel la première taille moyenne (TM1), déterminée par technique de diffraction laser, est comprise entre 1 µm et 5 µm et
dans lequel la deuxième taille moyenne (TM2), déterminée par technique de diffraction laser, est comprise entre 0,1 µm et 1 µm.

2. Procédé selon la revendication 1, dans lequel les particules du premier ensemble (E1) représentent au moins 60 % en nombre du total des particules de carbure de silicium dans la composition pulvérulente.

3. Procédé selon l'une quelconque des revendications 1 ou 2, dans lequel les particules du deuxième ensemble (E2) représentent au plus 40 % en nombre du total des particules de carbure de silicium dans la composition pulvérulente.

4. Procédé selon l'une quelconque des revendications 1 à 3, dans lequel les particules du premier ensemble (E1) représentent entre 60 % et 90 % en nombre du total des particules de carbure de silicium dans la composition pulvérulente, et dans lequel les particules du deuxième ensemble (E2) représentent entre 10 % et 40 % en nombre du total des particules de carbure de silicium dans la composition pulvérulente.

5. Procédé selon l'une quelconque des revendications 1 à 4, dans lequel la composition pulvérulente comprend en outre des particules de carbone.

6. Procédé selon la revendication 5, dans lequel la teneur volumique en particules de carbone dans la composition pulvérulente est supérieure ou égale à 5%.

7. Procédé selon l'une quelconque des revendications 1 à 6, dans lequel la structure fibreuse est formée par tissage tridimensionnel ou à partir d'une pluralité de strates fibreuses bidimensionnelles.

8. Procédé selon l'une quelconque des revendications 1 à 7, dans lequel la pièce est une pièce de turbomachine, et dans lequel la structure fibreuse constitue une préforme fibreuse de la pièce de turbomachine.

## Patentansprüche

1. Verfahren zur Herstellung eines Teils aus Verbundmaterial mit keramischer Matrix, umfassend zumindest:
- die Infiltration eines Fasergebildes, das eine pulverförmige Zusammensetzung umfasst, mit einer Infiltrations-Zusammensetzung im geschmolzenen Zustand, die zumindest Silizium umfasst, um eine keramische Matrix in der Porosität des Fasergebildes zu bilden, wobei die pulverförmige Zusammensetzung zumindest Siliziumkarbid-Partikel umfasst,
wobei die Siliziumkarbid-Partikel eine bimodale Größenverteilung aufweisen, mit einer ersten Menge (E1) von Siliziumkarbid-Partikeln, die eine erste mittlere Größe (TM1) aufweisen, und einer zweiten Menge (E2) von Siliziumkarbid-Partikeln, die eine zweite mittlere Größe (TM2) aufweisen, die kleiner ist als die erste mittlere Größe, wobei die Anzahl der Partikel der ersten Menge größer ist als die Anzahl der Partikel der zweiten Menge,
wobei die erste mittlere Größe (TM1), bestimmt durch die Technik der Laserdiffraktion, zwischen 1 µm und 5 µm beträgt und
wobei die zweite mittlere Größe (TM2), bestimmt durch die Technik der Laserdiffraktion, zwischen 0,1 µm und 1 µm beträgt.

2. Verfahren nach Anspruch 1, wobei die Partikel der ersten Menge (E1) mindestens 60 % der gesamten Anzahl der Siliziumkarbid-Partikel in der pulverförmigen Zusammensetzung darstellen.

3. Verfahren nach einem der Ansprüche 1 oder 2, wobei die Partikel der zweiten Menge (E2) höchstens 40 % der gesamten Anzahl der Siliziumkarbid-Partikel in der pulverförmigen Zusammensetzung darstellen.

4. Verfahren nach einem der Ansprüche 1 bis 3, wobei die Partikel der ersten Menge (E1) zwischen 60 % und 90 % der gesamten Anzahl der Siliziumkarbid-Partikel in der pulverförmigen Zusammensetzung darstellen, und wobei die Partikel der zweiten Menge (E2) zwischen 10 % und 40 % der gesamten Anzahl der Siliziumkarbid-Partikel in der pulverförmigen Zusammensetzung darstellen.

5. Verfahren nach einem der Ansprüche 1 bis 4, wobei die pulverförmige Zusammensetzung ferner Kohlenstoffpartikel umfasst.

6. Verfahren nach Anspruch 5, wobei der Volumengehalt an Kohlenstoffpartikeln in der pulverförmigen Zusammensetzung größer als oder gleich 5 % ist.

7. Verfahren nach einem der Ansprüche 1 bis 6, wobei das Fasergebilde durch dreidimensionale Verwebung oder ausgehend von mehreren zweidimensionalen Faserschichten gebildet wird.

8. Verfahren nach einem der Ansprüche 1 bis 7, wobei das Teil ein Teil einer Turbomaschine ist, und wobei das Fasergebilde eine Faservorform des Teils einer Turbomaschine darstellt.

## Claims

1. A process for manufacturing a ceramic matrix composite part, comprising at least:
- infiltrating a fibrous structure comprising a powder composition with a melt infiltration composition comprising at least silicon in order to form a ceramic matrix in the porosity of the fibrous structure, the powder composition comprising at least silicon carbide particles,
wherein the silicon carbide particles have a bimodal size distribution with a first set (E1) of silicon carbide particles having a first average size (TM1) and a second set (E2) of silicon carbide particles having a second average size (TM2) smaller than the first average size, the number of particles in the first set being greater than the number of particles in the second set,
wherein the first average size (TM1), determined by a laser diffraction method, is comprised between 1 µm and 5 µm
wherein the second average size (TM2), determined by a laser diffraction method, is comprised between 0.1 µm and 1 µm.

2. The process as claimed in claim 1, wherein the particles of the first set (E1) represent at least 60% by number of the total silicon carbide particles in the powder composition.

3. The process as claimed in any one of claims 1 to 2, wherein the particles of the second set (E2) represent at most 40% by number of the total silicon carbide particles in the powder composition.

4. The process as claimed in any one of claims 1 to 3, wherein the particles of the first set (E1) represent between 60% and 90% by number of the total silicon carbide particles in the powder composition, and wherein the particles of the second set (E2) represent between 10% and 40% by number of the total silicon carbide particles in the powder composition.

5. The process as claimed in any one of claims 1 to 4, wherein the powder composition further comprises carbon particles.

6. The process as claimed in claim 5, wherein the volume content of carbon particles in the powder composition is greater than or equal to 5%.

7. The process as claimed in any one of claims 1 to6, wherein the fibrous structure is formed by three-dimensional weaving or from a plurality of two-dimensional fibrous layers.

8. The process as claimed in any one of claims 1 to 7, wherein the part is a turbine engine part, and wherein the fibrous structure is a fibrous preform of the turbine engine part.
